Europäisches Patentamt

European Patent Office

Office européen des brevets

(19)

(11) Veröffentlichungsnummer: **0 255 180**
**B1**

(12) **EUROPÄISCHE PATENTSCHRIFT**

(45) Veröffentlichungstag der Patentschrift:
12.09.90

(51) Int. Cl.⁵: **C21B 13/00, C21B 13/14**

(21) Anmeldenummer: **87201437.8**

(22) Anmeldetag: **27.07.87**

(54) **Verfahren zur Reduktion feinkörniger, eisenhaltiger Materialien mit festen kohlenstoffhaltigen Reduktionsmitteln.**

(30) Priorität: **01.08.86 DE 3626027**

(43) Veröffentlichungstag der Anmeldung:
**03.02.88 Patentblatt 88/5**

(45) Bekanntmachung des Hinweises auf die Patenterteilung:
**12.09.90 Patentblatt 90/37**

(84) Benannte Vertragsstaaten:
**DE ES GB IT NL SE**

(56) Entgegenhaltungen:
**DE-A- 2 655 813
DE-A- 3 145 507
DE-B- 2 253 228
US-A- 2 742 354
US-A- 4 578 110**

(73) Patentinhaber: **METALLGESELLSCHAFT AG,**
**Reuterweg 14 Postfach 3724, D-6000 Frankfurt/M.1(DE)**

(72) Erfinder: **Hirsch, Martin, Römerstrasse 7,**
**D-6382 Friedrichsdorf 4(DE)**
Erfinder: **Rose, Fritz, Dr., Holzweg 9, D-6380 Bad**
**Homburg 6(DE)**
Erfinder: **Serbent, Harry Dr., Gustav Hoch-Strasse 5d,**
**D-6450 Hanau am Main(DE)**

(74) Vertreter: **Rieger, Harald, Dr., Reuterweg 14,**
**D-6000 Frankfurt am Main(DE)**

ACTORUM AG

**Beschreibung**

Die Erfindung betrifft ein Verfahren zur Direktreduktion von eisenoxidhaltigen Materialien in mehreren hintereinander geschalteten Wirbelschichten unter Verwendung von festen kohlenstoffhaltigen Reduktionsmitteln, wobei in der ersten Wirbelschicht eisenoxidhaltige Materialien unter Zufuhr von festem, kohlenstoffhaltigem Reduktionsmittel sowie von sauerstoffhaltigem Gas als Fluidisierungsgas unter schwach reduzierenden Bedingungen zu FeO reduziert und das FeO in der zweiten Wirbelschicht (7) unter stark reduzierenden Bedingungen bis zu 50 bis 80%iger Metallisierung reduziert wird.

Bei der Erzgewinnung und der Aufbereitung ärmerer Eisenerze fallen zunehmend feinkörnige Erze an. Für die Direktreduktion dieser feinkörnigen Erze unterhalb der Schmelztemperatur sind besonders Wirbelschichtverfahren geeignet, da diese sehr günstige Stoff- und Wärmeübergangsverhältnisse aufweisen. Bei der Direktreduktion mit festen, kohlenstoffhaltigen Reduktionsmitteln müssen folgende verschiedene Vorgänge nacheinander ablaufen: Aufheizen von Erz und Kohle, Schwelen der Kohle, Vergasen der Kohle, Reduktion des Erzes und evtl. Abkühlen des Endproduktes.

Aus der DE-AS 2 253 228 ist ein Verfahren bekannt, bei dem eine Direktreduktion unter Verwendung von Feinkohle als Reduktionsmittel bis zu einem Metallisierungsgrad von 60 bis 80% in zwei hintereinandergeschalteten klassischen Wirbelschichten erfolgt, d.h. niedrig expandierten Wirbelschichten mit definierter Bettoberfläche. Erz und Kohle werden in die erste Wirbelschicht chargiert und mit vorgewärmter Luft fluidisiert, wobei ein Gas mit niedrigem Reduktionspotential erzeugt wird, das eine Reduktion des Eisenoxidgehaltes hauptsächlich zum FeO-Stadium bewirkt. Das vorreduzierte Material fließt in die zweite Wirbelschicht und das schwachreduzierende Abgas wird in einen Wasserdampferzeuger geleitet. In die zweite Wirbelschicht wird ebenfalls vorgewärmte Luft als Fluidisierungsgas geleitet und ein stark reduzierendes Gas erzeugt, so daß die gewünschte Metallisierung erzielt wird. Das reduzierte Produkt fließt in einen Schmelzreaktor, dessen Wärmebedarf im wesentlichen durch Heizen mit elektrischer Energie gedeckt wird, während das stark reduzierende Abgas ebenfalls in den Wasserdampferzeuger geleitet wird. Bei diesem Verfahren entstehen durch lokale Überhitzungen in der zweiten Wirbelschicht zwischenzeitlich schmelzflüssige Phasen, die eine Ansatzbildung an den Luftzuführungsdüsen bewirken. Hierdurch wird ein gleichmäßiger Betriebsablauf empfindlich gestört.

Aus der DE-OS 25 10 116 ist ein Verfahren bekannt, bei dem die Direktreduktion mit festem kohlenstoffhaltigem Material in einer zirkulierenden Wirbelschicht erfolgt, wobei der Wirbelschichtreaktor zweistufig ausgebildet ist und die beiden Stufen ohne Trennung übereinander angeordnet sind. Erz und Kohle werden in den mittleren Teil des Reaktors chargiert. In diesem Teil wird auch Sauerstoff enthaltendes Gas eingedüst. Im oberen Teil des Reaktors wird durch teilweise Verbrennung des kohlenstoffhaltigen Materials die notwendige Wärme erzeugt; es findet eine Verkokung und Entgasung des kohlenstoffhaltigen Materials sowie eine gewisse Reduktion der Eisenoxide bei 850 bis 1000 °C statt. Aus dem oberen Teil wird eine Suspension aus festem Material und Gas abgezogen, aus der der Feststoff abgetrennt und wieder in den mittleren Teil des Reaktors zurückgeführt wird. Das Gas wird nach einer Entfernung von $CO_2$ und Wasserdampf als Fluidisierungs- und Reduktionsgas in den unteren Teil des Reaktors geleitet. Aus dem unteren Teil wird reduziertes Material und Koks abgezogen. Auch bei diesem Verfahren treten die oben geschilderten Probleme auf.

Der Erfindung liegt die Aufgabe zugrunde, bei der Direktreduktion mittels fester kohlenstoffhaltiger Reduktionsmittel in einer Wirbelschicht lokale Überhitzungen und Ansatzbildungen, insbesondere an den Düsen für die Zuführung sauerstoffhaltiger Gase, zu vermeiden und einen gesicherten Betriebsablauf zu ermöglichen.

Diese Aufgabe wird erfindungsgemäß dadurch gelöst, daß die Verweilzeit des Gases in der ersten expandierten Wirbelschicht so kurz gewählt wird, daß das Reduktionspotential maximal zur Reduktion zum FeO-Stadium führt, die aus der ersten Wirbelschicht (1) ausgetragene Gas-Feststoff-Suspension in die zweite expandierte Wirbelschicht (7) geleitet wird, in die zweite Wirbelschicht ein stark reduzierendes Gas als Fluidisierungsgas eingeleitet wird, aus dem Oberteil der zweiten Wirbelschicht stark reduzierendes Gas und ein großer Teil des entstandenen abgeschwelten kohlenstoffhaltigen Materials ausgetragen werden, das abgeschwelte kohlenstoffhaltige Material vom Gas abgetrennt und in die erste Wirbelschicht (1) zurückgeführt wird, ein Teil des Gases nach einer Reinigung und $CO_2$-Entfernung als Fluidisierungsgas in die zweite Wirbelschicht zurückgeleitet wird, aus dem unteren Teil der zweiten Wirbelschicht (7) das reduzierte Material zusammen mit dem restlichen Teil des abgeschwelten kohlenstoffhaltigen Materials ausgetragen wird, die Menge des im Kreislauf geführten abgeschwelten kohlenstoffhaltigen Materials ein Vielfaches der Menge der chargierten eisenoxidhaltigen Materialien beträgt, und der Wärmeinhalt der aus der ersten (1) in die zweite Wirbelschicht (7) geleiteten Suspension zur Deckung des Wärmeverbrauches in der zweiten Wirbelschicht verwendet wird.

Unter dem Ausdruck "expandierte Wirbelschicht" sind stark expandierte Wirbelschichten zu verstehen, die oberhalb der Schwebegeschwindigkeit der Feststoffteilchen betrieben werden. Dieses Wirbelschichtprinzip zeichnet sich dadurch aus, daß – im Unterschied zur "klassischen" Wirbelschicht, bei der eine dichte Phase durch einen deutlichen Dichtesprung von dem darüber befindlichen Gasraum getrennt ist – Verteilungszustände ohne definierte Grenzschicht vorliegen. Ein Dichtesprung zwischen dichter Phase und darüber befindlichem Staubraum ist nicht vorhanden; jedoch nimmt innerhalb des Reaktors die Feststoffkonzentration von unten nach oben ständig ab. Aus dem oberen Teil des Reaktors wird eine Gas-Feststoff-Suspension ausgetragen. Bei der Definition der Betriebsbedingungen über die Kennzahlen von Froude und Archimedes ergeben sich die Bereiche:

$$0{,}1 \quad \leqq \quad 3/4 \quad \cdot \quad Fr^2 \quad \cdot \quad \frac{\rho_g}{\rho_k - \rho_g} \quad \leqq \quad 10,$$

bzw.

$$0{,}01 \quad \leqq \quad Ar \quad \leqq \quad 100,$$

wobei

$$Ar \quad = \quad \frac{d_k^{\,3} \quad \cdot \quad g \, (\rho_k = \rho_g)}{\rho_g \quad \cdot \quad \nu^2} \quad und$$

$$Fr^2 \quad = \quad \frac{u^2}{g \cdot d_k}$$

sind.

Es bedeuten:

u      die relative Gasgeschwindigkeit in m/s

Ar    die Archimedes-Zahl

Fr    Froude-Zahl

$\rho_g$    die Dichte des Gases in kg/m$^3$

$\rho_k$    die Dichte des Feststoffteilchens in kg/m$^3$

$d_k$    den Durchmesser des kugelförmigen Teilchens in m

$\nu$    die kinematische Zähigkeit in m$^2$/s

g    die Gravitationskonstante in m/s$^2$

Als kohlenstoffhaltiges Material können alle Kohlen von Anthrazit bis zum Lignit, kohlenstoffhaltige Mineralien und Abfallprodukte - wie z.B. Oelschiefer, Petrolkoks oder Waschberge - eingesetzt werden, die bei Raumtemperatur im festen Zustand vorliegen. Als sauerstoffhaltiges Gas wird vorzugsweise zumindestens sauerstoffangereicherte Luft verwendet. Die Verweilzeit des Gases in der ersten Wirbelschicht liegt etwa im Bereich von 0,5 bis 3 sec und wird durch Wahl der Höhe des Reaktors eingestellt. Innerhalb der oben angegebenen Grenzwerte ist auch eine Einstellung der Verweilzeit durch Regelung der Gasgeschwindigkeit möglich. Die Verweilzeit des eisenoxidhaltigen Materials in der ersten Wirbelschicht beträgt etwa 0,2 min bis zu l,5 min. Die mittlere Feststoffdichte in der ersten Wirbelschicht beträgt l00-300 kg/m³, bezogen auf den leeren Ofenraum. In die zweite Wirbelschicht wird kein freien Sauerstoff enthaltendes Gas eingeleitet. Die Verweilzeit des Gases wird auf über 3 sec und die Verweilzeit des eisenoxidhaltigen Materials auf etwa l5 bis 40 min eingestellt. Der zweite Reaktor hat dementsprechend eine größere Höhe als der erste Reaktor. Die mittlere Feststoffdichte im unteren Teil der zweiten Wirbelschicht unterhalb der Einleitung der Gas-Feststoff-Suspension aus der ersten Wirbelschicht beträgt 300-600 kg/m³, bezogen auf den leeren Ofenraum. Im oberen Teil beträgt die mittlere Feststoffdichte 50-200 kg/m³. Die Einleitung der Gas-Feststoff-Suspension erfolgt mindestens l m oberhalb der Zuführung des stark reduzierenden Fluidisierungsgases bis zu einer Höhe von maximal 30 % der Ofenhöhe. Es wurde überraschender Weise gefunden, daß bei Einhaltung dieser Betriebsbedingungen eine starke Separierung von abgeschweltem kohlenstoffhaltigen Material und reduzierten eisenhaltigen Material in der zweiten Wirbelschicht erreicht werden kann, was im Widerspruch zu der herrschenden Lehrmeinung steht. Die im zweiten Reaktor erforderliche Wärme wird von der Gas-Feststoff-Suspension aus dem ersten Reaktor eingebracht, wobei die überwiegende Wärmemenge durch das als Wärmeträger dienende abgeschwelte kohlenstoffhaltige Material eingebracht wird. Dazu wird die Temperatur in der ersten Wirbelschicht auf einen Wert eingestellt, der höher liegt als die Austrittstemperatur aus der zweiten Wirbelschicht. Die dazu erforderliche Überhitzung in der ersten Wirbelschicht richtet sich nach der Menge des umlaufenden abgeschwelten kohlenstoffhaltigen Materials. Die Temperatur in den Wirbelschichten liegt je nach .\ieaktivität des kohlenstoffhaltigen Materials im Bereich von 850 bis 1100 °C. Das reduzierte Produkt wird aus dem unteren Teil abgezogen, wobei allerdings auch eine gewisse Menge an abgeschweltem kohlenstoffhaltigem Material mit abgezogen wird. Die Wirbelschichten können ohne großen Überdruck oder mit Überdruck bis zu 20 bar betrieben werden. Ein Teil des Abgases aus der zweiten Wirbelschicht wird einer anderen Verwendung zugeführt, z.B. als Brenngas in eine Dampferzeugungsanlage für eine Stromerzeugung. Das reduzierte Produkt kann im heißen Zustand oder nach einer Abkühlung der Weiterverarbeitung zugeführt werden, wobei das kohlenstoffhaltige Material vorher z.B. durch Magnetscheidung abgetrennt werden kann.

Eine vorzugsweise Ausgestaltung besteht darin, daß die Eintrittstemperatur der Suspension in die zweite Wirbelschicht 30 bis 80 °C höher liegt als die Temperatur des aus dem Oberteil abgezogenen stark reduzierenden Gases und des abgeschwelten kohlenstoffhaltigen Materials und die Menge des im Kreislauf geführten abgeschwelten kohlenstoffhaltigen Materials das 10-fache bis 50-fache des eingesetzten eisenoxidhaltigen Materials beträgt.

Wenn die Temperatur der Überhitzung der Suspension in der ersten Wirbelschicht im oberen Bereich liegt, liegt die Menge des im Kreislauf geführten Materials im unteren Bereich, und umgekehrt. Die optimale Betriebsweise besteht darin, daß die Überhitzung bis zu der maximal zulässigen Temperatur erfolgt, bei der gerade noch kein Sintern oder Anbacken erfolgt, und die Menge des im Kreislauf geführten Materials entsprechend niedrig gehalten wird. Bei einer Unterschreitung der 10-fachen Menge des im Kreislauf geführten Materials ergeben sich unzulässig hohe Temperaturdifferenzen, die zu einer Überschreitung des Schmelzpunktes des eisenoxidhaltigen Materials und der Asche des kohlenstoffhaltigen Materials führen können. Andererseits führt eine Überschreitung der 50-fachen Menge des im Kreislauf geführten Materials zu einem hohen Druckverlust und damit zu höheren Feststoffkonzentrationen, die ihrerseits die gewünschte Separierung in der zweiten Wirbelschicht behindert.

Eine vorzugsweise Ausgestaltung besteht darin, daß aus dem aus dem unteren Teil der zweiten Wirbelschicht ausgetragenen Material das abgeschwelte kohlenstoffhaltige Material abgetrennt wird, und mindestens ein Teil in die erste Wirbelschicht zurückgeführt wird. Dadurch wird einerseits das abgeschwelte kohlenstoffhaltige Material wieder in den Prozeß zurückgeführt und andererseits wird ein reines reduziertes Produkt erhalten. Wenn das reduzierte Produkt einer Endreduktion zugeführt wird, kann der dabei notwendige Kohlenstoff in genau dosierter Menge zugesetzt werden. Dies gilt auch für das Einschmelzen des reduzierten Produktes.

Eine vorzugsweise Ausgestaltung besteht darin, daß das eisenoxidhaltige Material vor dem Einsatz in die erste Wirbelschicht durch das stark reduzierende Gas aus der zweiten Wirbelschicht vorgewärmt wird. Dadurch wird ein Teil der fühlbaren Wärme des Abgases in besonders günstiger Weise ausgenutzt.

Eine vorzugsweise Ausgestaltung besteht darin, daß das reduzierte Material in Schmelzreaktoren vollständig reduziert und eingeschmolzen wird und das Abgas der Schmelzreaktoren als stark reduzierendes Gas in die zweite Wirbelschicht geleitet wird. Dadurch können die bei der Endreduktion und beim Einschmelzen entstehenden Gase für den Prozeß ausgenutzt werden. Das Abgas der Schmelzreaktoren kann aber auch als stark reduzierendes Gas für andere Zwecke verwendet werden.

Eine vorzugsweise Ausgestaltung besteht darin, daß ein Teil des abgetrennten, abgeschwelten kohlenstoffhaltigen Materials in den Schmelzreaktor chargiert wird. Die Menge wird so gewählt, daß der Kohlenstoff zur Endreduktion, evtl. zur Aufkohlung und bei einem Konverter zur notwendigen Wärmeerzeugung ausreicht. Durch diesen Einsatz werden mit dem Kohlenstoff keine flüchtigen Bestandteile in die Schmelze eingeführt, die der Schmelze Energie entziehen würden.

Die Erfindung wird anhand eines Fließschemas und von Beispielen näher erläutert.

In die erste Wirbelschicht (1) wird über Leitung (2) vorgewärmtes Erz, über Leitung (3) Kohle, über Leitung (4) Sauerstoff und über Leitung (5) Luft eingeblasen. Der Wirbelschichtreaktor hat einen Innendurchmesser von 0,06 m und eine Höhe von 6 m. Über Leitung (6) wird die Gas-Feststoffsuspension in die zweite Wirbelschicht (7) ausgetragen. Dieser Wirbelschichtreaktor hat einen Innendurchmesser von 0,08 m und eine Höhe von 20 m. In die zweite Wirbelschicht wird über Leitung (8) ein sauerstofffreies, stark reduzierendes Gas eingeleitet. Über Leitung (9) wird ein stark reduzierendes Gas abgeleitet, das einen großen Teil des abgeschwelten, kohlenstoffhaltigen Materials enthält und in einen Zyklonabscheider (10) geleitet. Das weitgehend von Feststoffen befreite Gas wird über Leitung (11) in einen Vorwärmer (12) geleitet. Der aus dem Gas im Zykonabscheider (10) abgeschiedene Feststoff geht über Leitung (2) in die Wirbelschicht (1). Das frische Erz und gegebenenfalls Zuschlagstoffe werden über Leitung (13) in den Vorwärmer (12), über Leitung (14) in den Zyklonabscheider (10) und Leitung (2) in die Wirbelschicht (1) geleitet. Aus dem Vorwärmer (12) wird das Gas über Leitung (15) in eine Gasbehandlung (16) gleitet, in der das Gas entstaubt, abgekühlt und weitgehend von $CO_2$ und $H_2O$ befreit wird. Ein Teilstrom des Gases wird über Leitung (17) aus dem Kreislauf ausgeschleust. Das gereinigte Gas wird nach einer nicht dargestellten Kompression über Leitung (18) in einen Gaserhitzer (19) und von dort über Leitung (8) in die Wirbelschicht (7) geführt. Aus der Wirbelschicht (7) wird reduziertes Erz sowie ein Teil der abgeschwelten Kohle über Leitung (20) abgezogen und in eine Produktbehandlung (2l) geleitet. Nach einer Kühlung und Magnetscheidung wird über Leitung (22) das reduzierte Erz abgezogen. Es kann über Leitung (23) einem Schmelzreaktor (24) zugeführt werden oder über Leitung (25) als Produkt abgeführt werden. Über Leitung (26) wird abgeschweltes, kohlenstoffhaltiges Material abgeführt. Es kann über Leitung (27) in den Vorwärmer (l2), über Leitung (28) in den Schmelzreaktor (24) und über Leitung (29) aus dem Verfahren abgeführt werden. Aus dem Schmelzreaktor (24) werden über Leitung (30) flüssiges Roheisen und über Leitung (3l) Schlacke abgezogen. Das Abgas des Schmelzreaktors (24) wird über Leitung (32), evtl. nach einer nicht dargestellten Gasreinigung, in Leitung (8) geführt. Der Schmelzreaktor (24) kann als Elektroreduktionsofen ausgebildet sein oder als Konverter, in den über Leitung (33) Sauerstoff eingeblasen wird.

Die Ausführungsbeispiele werden in tabellarischer Form anhand der Positionen aus dem Fließschema dargestellt.

## Stoffstrom (pro Stunde)

| Position | Beispiel 1 | Beispiel 2 |
|---|---|---|
| 2 | 900°C<br>303,2 kg Feststoff | 900°C<br>394,7 kg Feststoff |
| 3 | 25°C<br>9,3 kg Kohle<br>58% C fix (waf)<br>42% Flüchtige(waf)<br>35% Asche<br>10% Feuchte | 25°C<br>7,2 kg Kohle<br>70% C fix (waf)<br>30% Flüchtige(waf<br>18% Asche<br>6% Feuchte |
| 4 | 60°C<br>3,5 kg Sauerstoff | 60°C<br>3,5 kg Sauerstoff |

5

| Position | Beispiel 1 | Beispiel 2 |
|---|---|---|
| 5 | 60°C<br>2,4 kg Luft | – |
| 6 | 944°C<br>307,1 kg Feststoff<br>ca. 32% Reduktionsgrad<br>11,0 kg Gas<br>21,2% $CO_2$<br>21,2% CO<br>17,3% $H_2$<br>22,9% $H_2O$<br>17,4% $N_2$ | 931°C<br>397,7 kg Feststoff<br>ca. 32% Reduktionsgrad<br>8,1 kg Gas<br>25,6% $CO_2$<br>25,6% CO<br>19,4% $H_2$<br>25,5% $H_2O$<br>3,9% $N_2$ |
| 8 | 500°C<br>5,3 kg Gas | 400°C<br>15,7 kg Gas |
| 9 | 900°C<br>292,2 kg Feststoff<br>19,4 kg Gas<br>15,8% $CO_2$<br>39,1% CO<br>20,4% $H_2$<br>10,9% $H_2O$<br>13,8% $N_2$ | 900°C<br>385,2 kg Feststoff<br>26,1 kg Gas<br>18,5% $CO_2$<br>46,0% CO<br>20,3% $H_2$<br>10,7% $H_2O$<br>4,5% $N_2$ |

| Position | Beispiel 1 | Beispiel 2 |
|---|---|---|
| 13 | 25°C<br>10 kg Erz<br>97,5% $Fe_2O_3$<br>1,0% Feuchte<br>Rest Gangart | 25°C<br>10 kg Erz<br>87,4% $Fe_2O_3$<br>5,0% Feuchte<br>Rest Gangart |
| 14 | 623°C<br>11 kg Feststoff | 680°C<br>9,5 kg Feststoff |
| 15 | 623°C<br>0,1 kg Feststoff<br>19,5 kg Gas | 680°C<br>0,1 kg Feststoff<br>26,6 kg Gas |
| 17 | 13,6 kg Gas | 12,0 kg Gas |
| 18 | 93°C<br>4,5 kg Gas<br>5,0% $CO_2$<br>45,4% CO<br>23,6% $H_2$<br>10,1% $H_2O$<br>15,9% $N_2$ | 93°C<br>10,5 kg Gas<br>5,0% $CO_2$<br>55,2% CO<br>24,3% $H_2$<br>10,1% $H_2O$<br>5,4% $N_2$ |
| 20 | 900°C<br>11,8 kg Feststoff | 900°C<br>10,2 kg Feststoff |

| Position | Beispiel 1 | Beispiel 2 |
|---|---|---|
| 23 | 200°C<br>10,3 kg Eisenschwamm<br>80% Metallisierung | 200°C<br>8,4 kg Eisenschwamm<br>80% Metallisierung |
| 24 | Elektroduktionsofen | Konverter |
| 27 | 1,0 kg char | – |
| 28 | 0,4 kg char | 1,8 kg char |
| 30 | 1550°C<br>7,2 kg Roheisen<br>1% C | 1550°C<br>6,3 kg Roheisen<br>1% C |
| 31 | 1550°C<br>2,8 kg Schlacke | 1550°C<br>1,8 kg Schlacke |
| 32 | 1550°C<br>0,7 kg Gas | 1550°C<br>5,0 kg Gas |
| 33 | – | 2,8 kg Sauerstoff |

Die Vorteile der Erfindung bestehen darin, daß ein störungsfreier Betrieb der Reduktionen der Wirbelschicht möglich ist. In der ersten wirbelschicht, in die zur Erzeugung der notwendigen Wärme sauerstoffhaltige Gase eingeleitet werden, liegt praktisch kein metallisches Eisen vor. Eine Reoxidation von metallischem Eisen und lokale Überhitzung an den Düsen wird also vermieden. In der zweiten Wirbelschicht wird dies ebenfalls vermieden, da dort keine sauerstoffhaltigen Gase eingeleitet werden. Eine Rückführung von metallischem Eisen aus der zweiten Wirbelschicht in die erste Wirbelschicht wird ebenfalls vermieden.

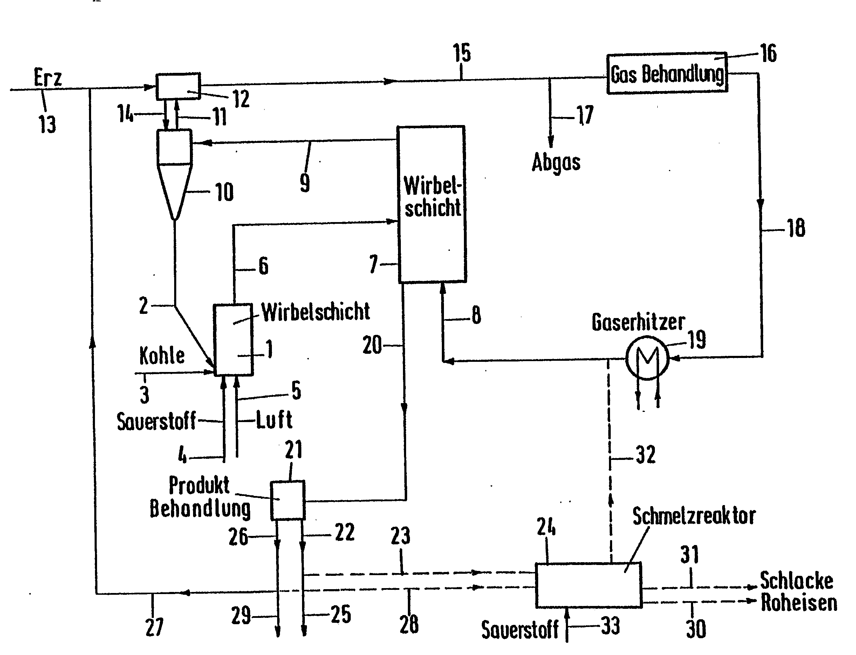

## Patentansprüche

1. Verfahren zur Direktreduktion von eisenoxidhaltigen Materialien in mehreren hintereinander geschalteten Wirbelschichten unter Verwendung von festen kohlenstoffhaltigen Reduktionsmitteln, wobei in der ersten Wirbelschicht (1) eisenoxidhaltige Materialien unter Zufuhr von festem, kohlenstoffhaltigem Reduktionsmittel sowie von sauerstoffhaltigem Gas als Fluidisierungsgas unter schwach reduzierenden Bedingungen zu FeO reduziert und das FeO in der zweiten Wirbelschicht (7) unter stark reduzierenden Bedingungen bis zu 50 bis 80%iger Metallisierung reduziert wird, dadurch gekennzeichnet, daß die Verweilzeit des Gases in der ersten expandierten Wirbelschicht so kurz gewählt wird, daß das Reduktionspotential maximal zur Reduktion zum FeO-Stadium führt, die aus der ersten Wirbelschicht (1) ausgetragene Gas-Feststoff-Suspension in die zweite, expandierte Wirbelschicht (7) geleitet wird, in die zweite Wirbelschicht ein stark reduzierendes Gas als Fluidisierungsgas eingeleitet wird, aus dem Oberteil der zweiten Wirbelschicht stark reduzierendes Gas und ein großer Teil des entstandenen abgeschwelten kohlenstoffhaltigen Materials ausgetragen werden, das abgeschwelte kohlenstoffhaltige Material vom Gas abgetrennt und in die erste Wirbelschicht (1) zurückgeführt wird, ein Teil des Gases nach einer Reinigung und CO$_2$-Entfernung als Fluidisierungsgas in die zweite Wirbelschicht zurückgeleitet wird, aus dem unteren Teil der zweiten Wirbelschicht (7) das reduzierte Material zusammen mit dem restlichen Teil des abgeschwelten kohlenstoffhaltigen Materials ausgetragen wird, die Menge des im Kreislauf geführten abgeschwelten kohlenstoffhaltigen Materials ein Vielfaches der Menge der chargierten eisenoxidhaltigen Materialien beträgt, und der Wärmeinhalt der aus der ersten (1) in die zweite Wirbelschicht (7) geleiteten Suspension zur Deckung des Wärmeverbrauches in der zweiten Wirbelschicht verwendet wird.

2. Verfahren nach Anspruch 1, dadurch gekennzeichnet, daß die Eintrittstemperatur der Suspension in die zweite Wirbelschicht 30–80°C höher liegt als die Temperatur des aus dem Oberteil abgezogenen, stark reduzierenden Gases und das abgeschwelten kohlenstoffhaltigen Materials das 10fache bis 50fache des eingesetzten eisenoxidhaltigen Materials beträgt.

3. Verfahren nach Anspruch 1 oder 2, dadurch gekennzeichnet, daß aus dem aus dem unteren Teil der zweiten Wirbelschicht ausgetragenen Material das abgeschwelte kohlenstoffhaltige Material abgetrennt wird, und mindestens ein Teil in die erste Wirbelschicht zurückgeführt wird.

4. Verfahren nach einem der Ansprüche 1 bis 3, dadurch gekennzeichnet, daß das eisenoxidhaltige Material vor dem Einsatz in die erste Wirbelschicht durch das stark reduzierende Gas aus der zweiten Wirbelschicht vorgewärmt wird.

5. Verfahren nach einem der Ansprüche 1 bis 4, dadurch gekennzeichnet, daß das reduzierte Material in Schmelzreaktoren vollständig reduziert und eingeschmolzen wird und das Abgas der Schmelzreaktoren als stark reduzierendes Gas in die zweite Wirbelschicht geleitet wird.

6. Verfahren nach Anspruch 5, dadurch gekennzeichnet, daß ein Teil des abgetrennten, abgeschwelten kohlenstoffhaltigen Materials in den Schmelzreaktor chargiert wird.

## Revendications

1. Procédé de réduction directe de matériaux contenant de l'oxyde de fer, dans plusieurs lits fluidisés montés l'un derrière l'autre, et en utilisant des agents réducteurs solides contenant du carbone, qui consiste, dans le premier lit fluidisé (1), à réduire en FeO des matériaux contenant de l'oxyde de fer par envoi d'agent réducteur solide contenant du carbone ainsi que de gaz contenant de l'oxygène comme gaz de fluidisation, dans des conditions faiblement réductrices, et à réduire le FeO, dans le deuxième lit fluidisé (7), dans des conditions très réductrices jusqu'à obtention d'une métallisation de 50 à 80%, caractérisé en ce qu'il consiste à choisir la durée de séjour du gaz dans le premier lit fluidisé expansé si courte que le potentiel de réduction amène, au maximum, à la réduction au stade de FeO, à envoyer la suspension de gaz et de matières solides, soutirée du premier lit fluidisé (1), au deuxième lit fluidisé (7) expansé, à envoyer, au deuxième lit fluidisé, un gaz très réducteur servant de gaz de fluidisation, à soutirer, de la partie supérieure du deuxième lit fluidisé, du gaz très réducteur et une grande partie du matériau contenant du carbone et distillé qui s'est créé, à séparer du gaz le matériau contenant du carbone et distillé, et à le renvoyer au premier lit fluidisé (1), à retourner une partie du gaz, après une épuration et une élimination du CO$_2$, comme gaz de fluidisation au deuxième lit fluidisé, à soutirer de la partie inférieure du deuxième lit fluidisé (7) le matériau réduit, en même temps que la partie restante du matériau distillé et contenant du carbone, la quantité du matériau distillé et contenant du carbone circulant en circuit fermé représentant un multiple de la quantité des matériaux contenant de l'oxyde de fer, qui ont été chargés, et à utiliser la teneur calorifique de la suspension envoyée du premier (1) au deuxième lit fluidisé (7), pour couvrir la consommation de chaleur dans le deuxième lit fluidisé.

2. Procédé suivant la revendication 1, caractérisé en ce que la température d'entrée de la suspension dans le deuxième lit fluidisé est plus élevée de 30 à 80°C que la température du gaz très réducteur soutiré de la partie supérieure et du matériau distillé et contenant du carbone et la quantité du matériau distillé et contenant du carbone, circulant en circuit fermé, représente de 10 fois à 50 fois le matériau ferreux qui est utilisé.

3. Procédé suivant la revendication 1 ou 2, caractérisé en ce qu'il consiste à séparer du matériau soutiré de la partie inférieure du deuxième lit fluidisé, le matériau distillé et contenant du carbone, et à en renvoyer au moins une partie au premier lit fluidisé.

4. Procédé suivant l'une des revendications 1 à 3, caractérisé en ce qu'il consiste à préchauffer le matériau contenant de l'oxyde de fer, avant de l'introduire dans le premier lit fluidisé, par le gaz très réducteur provenant du deuxième lit fluidisé.

5. Procédé suivant l'une des revendications 1 à 4, caractérisé en ce qu'il consiste à réduire entièrement et à fondre le matériau réduit dans des réacteurs de fusion et à envoyer l'effluent gazeux des réacteurs de fusion en tant que gaz très réducteur au deuxième lit fluidisé.

6. Procédé suivant la revendication 5, caractérisé en ce qu'il consiste à charger dans le réacteur de fusion une partie du matériau contenant du carbone séparé et distillé.

## Claims

1. A process for the direct reduction of iron oxide-containing materials in a plurality of series-connected fluidized beds by means of solid carbonaceous reducing agents, wherein in the first fluidized bed (1), iron oxide-containing materials are reduced to FeO under weakly reducing conditions with the infeed of solid carbonaceous reducing agents and also oxygen-containing gas as fluidizing gas, and the FeO is reduced to 50 to 80% metallization in the second fluidized bed (7) under strongly reducing conditions, characterized in that the period of dwell of the gas in the first, expanded fluidized bed is selected to be so short that the reduction potential will result in a reduction not in excess of the FeO state, the gas-solids suspension discharged from the first fluidized bed (1) is supplied to the second, expanded fluidized bed (7), a strongly reducing gas is supplied as a fluidizing gas into the second fluidized bed, a strongly reducing gas and a major portion of the resulting devolatilized carbonaceous material are discharged from the upper portion of the second fluidized bed, the devolatilized carbonaceous material is separated from the gas and returned to the first fluidized bed (1), part of the gas after a purification and $CO_2$-removal is recycled to the second fluidized bed as fluidizing gas, the reduced material together with the remainder of the devolatilized carbonaceous material are discharged from the lower portion of the second fluidized bed (7), the amount of the devolatilized carbonaceous material which is circulated is a multiple of the amount of charged iron oxide-containing materials, and the heat content of the suspension which is supplied from the first fluidized bed (1) to the second fluidized bed (7) is used to cover the heat consumption in the second fluidized bed.

2. A process according to Claim 1, characterized in that the temperature of the suspension entering the second fluidized bed exceeds by 30 to 80°C the temperature of the strongly reducing gas withdrawn from the upper portion and the devolatilized carbonaceous material and the amount of the devolatilized carbonaceous material which is circulated is 10 to 50 times that of the iron oxide-containing material which is used.

3. A process according to Claim 1 or 2, characterized in that the devolatilized carbonaceous material is separated from the material which is discharged from the lower portion of the second fluidized bed and at least a part is returned to the first fluidized bed.

4. A process according to one of Claims 1 to 3, characterized in that the iron oxide-containing material is preheated by the strongly reducing gas from the second fluidized bed before the iron oxide-containing material is charged into the first fluidized bed.

5. A process according to one of Claims 1 to 4, characterized in that the reduced material is completely reduced and melted in melting reactors and that the exhaust gas from the melting reactors is supplied to the second fluidized bed as strongly reducing gas.

6. A process according to Claim 5, characterized in that a part of the separated devolatilized carbonaceous material is charged into the melting reactor.

Erz

Gas Behandlung — 16

15

17

Abgas

Wirbel-schicht

9

12

14 — 11

13

10

7

18

6

2

Wirbelschicht

Gaserhitzer

19

Kohle

1

8

M

3

20

32

5

Sauerstoff — Luft

4

21

Produkt Behandlung

24

Schmelzreaktor

26

22

23

31

Schlacke

Roheisen

27

29

25

28

Sauerstoff — 33

30

EP 0 255 180 B1